Europäisches Patentamt

European Patent Office

Office européen des brevets

(11) Publication number: **0 082 717**
**B1**

(12) **EUROPEAN PATENT SPECIFICATION**

(45) Date of publication of patent specification: **15.04.87**

(21) Application number: **82306824.2**

(22) Date of filing: **21.12.82**

(51) Int. Cl.⁴: **C 08 F 285/00, C 08 L 27/06**

(54) **Sequential polymer useful as impact modifier for thermoplastic polymer, method of making and composition containing the polymer.**

(30) Priority: **21.12.81 US 332431**

(43) Date of publication of application:
**29.06.83 Bulletin 83/26**

(45) Publication of the grant of the patent:
**15.04.87 Bulletin 87/16**

(84) Designated Contracting States:
**AT BE CH DE FR GB IT LI NL SE**

(56) References cited:
**FR-A-2 111 121**
**FR-A-2 224 500**
**US-A-3 644 250**

**CHEMICAL ABSTRACTS, vol. 83, no. 8, Aug 25, 1975, p. 76, no. 60294x, Columbus, Ohio (US)**

**CHEMICAL ABSTRACTS, vol. 78, no. 20, May 21, 1973, p. 73, no. 125381s, Columbus, Ohio (US)**

(73) Proprietor: **Rohm and Haas Company**
**Independence Mall West**
**Philadelphia, Pennsylvania 19105 (US)**

(72) Inventor: **Goldman, Theodore Daniel**
**General Green & General Fermoy Roads**
**Washington's Crossing, PA 18977 (US)**

(74) Representative: **Angell, David Whilton et al**
**Rohm and Haas Company Patent Department**
**Chesterfield House Bloomsbury Way**
**London WC1A 2TP (GB)**

Courier Press, Leamington Spa, England.

# 0 082 717

**Description**

This invention concerns sequential polymer useful as impact modifier for thermoplastic polymer, especially PVC, method of making the polymer and composition containing the polymer such as impact modified thermoplastics, particularly impact modified PVC.

U.S.—A—4,078,018 discloses PVC impact modifier graft polymers having a butadiene-alkyl acrylate backbone polymer which is agglomerated. As defined therein the agglomeration operation consists of enlarging a certain quantity of particles by processes different from polymerization. The acrylic monomer and styrene monomer are successively grafted onto the backbone polymer in aqueous emulsion.

U.S.—A—3,842,144 concerns PVX impact modifiers obtained by graft polymerizing upon a cross-linked butadiene-styrene rubber latex a first and then a second grafting component in a sequential two stage process.

U.S.—A—3,644,250 teaches PVC impact modifiers produced by grafting first styrene and then methyl methacrylate onto an elastomer of butadiene/n-butyl acrylate/styrene.

U.S.—A—4,173,596 teaches a seed polymer of cross-linked poly(n-butylacrylate), an intermediate layer derived from n-butyl acrylate and an additional monomer, and an outer shell derived from styrene and methyl methacrylate.

U.S.—A—3,264,373 discloses low butadiene level impact modifiers for PVC, having up to 20% butadiene, preferably up to 12%, and the balance alkyl acrylate in the rubber state, and a second stage free of styrene.

G.B.—A—1,251,403 teaches impact modifier polymers having a butadiene based trunk polymer containing at least 60% butadiene and grafting polymers of first methyl methacrylate and cross-linking monomers then styrene, then methyl methacrylate and optional crosslinking monomer.

Each known impact modifier polymer suffers from one or more deficiencies. For example, the modifiers prepared in accordance with U.S.—A—4,078,018 may suffer destruction during processing in PVC, and may have insufficient impact efficiency.

It is an object of the present invention to provide impact modifiers having attractive performance characteristics in PVC.

It is a further object to provide an impact modifier which may have good efficiency at low levels and at low temperatures.

Another object is to provide improved impact modified PVC compositions and a process for producing impact modifiers that may be capable of using fast polymerization cycle times and relatively low pressure polymerization equipment.

Accordingly, the present invention comprises sequential polymer of at least three stages, Stage A having at least 50% be weight of units of butadiene and at least 10% by weight of units of at least one ($C_2$ to $C_8$)-alkyl acrylate, Stage B having at least 80% by weight of units of styrene, Stage C having at least 50% by weight of units of methyl methacrylate and at least 1% by weight of units of at least one ($C_1$ to $C_4$)-alkyl acrylate, Stage A being non-agglomerated and comprising about 50 to 85% by weight of the modifier, and the weight ratio of Stage C to Stage B being at least 1.

In another aspect, the invention comprises thermoplastic polymer, for example PVC containing at least 1% by weight based on thermoplastic polymer of said impact modifier.

The invention also embraces a process for preparing said polymer comprising successively coating a non-crosslinked, non-agglomerated diene/acrylate copolymer core with styrere and then with methyl methacrylate.

The sequential polymer of the invention unexpectedly imparts superior impact efficiency at relatively low levels of butadiene in the core. Lowering of butadiene content is advantageous as this may permit reduction of polymerization cycle time and the use of lower pressure polymerization equipment. Polymer according to the invention may have good impact efficiency when incorporated in thermoplastics at low levels and low temperatures and optionally includes additional stages preceeding Stage A, between the stages, or after Stage C.

Stage A is a non-crosslinked polymer of at least 50% by weight of units of butadiene and at least 10% by weight of units of one or more ($C_2$—$C_8$)-alkyl acrylates; preferably the butadiene:alkyl ratio is 75—95:25—5. Such acrylates may include butyl, hexyl, or octyl arcylate. It is important that Stage A be non-agglomerated and non-crosslinked. By non-crosslinked is meant not having units of cross-linking monomers such as divinyl benzene. Stage B, polymerized in the presence of Stage A, is a polymer containing at least 80% by weight of units of styrene. Stage C, polymerized in the presence of Stage B, is a polymer containing at least 50% by weight of units of methyl methacrylate and at least 1% by weight of units of one or more ($C_1$—$C_4$)-alkyl acrylates. Preferred acrylates include methyl, ethyl, (n- or iso-) propyl, and/or (n- or iso-) butyl acrylate.

The weight ratio of Stages A:B:C, excluding optional additional stages, is 50—80:25—5:30—10, the weight ratio of C:B being at least 1. Preferably the ratio of A:B:C is 70—85:10—15:10—20.

While it is preferred that no additional stages other than A, B, and C are present in the modifier, additional stages containing any of the aforementioned monomer units, or even other ethylenically unsaturated monomer units, can be present, but preferably do not constitute more than 25% by weight of the total polymer. Stages A, B, and C may contain units of other monomers such as one or more of:

2

styrene, other alkyl acrylates and methacrylates, vinyl esters, acrylonitrile, and, except in the case of Stage A, crosslinking monomers comprising one or more of the following: divinyl benzene, diacrylates and dimethacrylates (including for example ethylene glycol dimethacrylate, butylene glycol diacrylate, and allyl methacrylate).

The sequential polymer can be prepared by gradually feeding the monomers of Stage A into a reactor either simultaneously or batchwise whereby a uniform particle size in the desired range can be obtained. The particles are grown to the desired particle size, preferably 0.15 µm to 0.20 µm (1500 to 2000 A°), rather than to some smaller size with subsequent agglomeration. Subsequent stages are polymerized in the presence of preferred Stage A under conditions known in the art, such as soap concentration, so that the locus of polymerization is at the surface of the previously formed particles.

The polymer may be incorporated in thermoplastic polymers such as PVC by conventional compounding methods, and in amounts of for example 1 to 25% by weight, preferably 3 to 15%, based on the weight of thermoplastic polymer.

The following examples serve to illustrate, but not limit, the invention and provide a comparison with a known modifier.

EXAMPLES

Example 1

Preparation of Sequential Polymer

A. Preparation of budadiene-butyl acrylate polymer — Stage A
The materials are:
77 parts of butadiene (Bd)
23 parts of butyl acrylate (BA)
4 parts of methyl methacrylate (MMA)
3 parts of butadiene/styrene seed polymer
0.05 parts of acetic acid
1.7 parts of sodium lauryl sulphate (SLS)
.03 parts of sodium chloride
.6 parts cumene hydroperoxide (CHP)
.3 parts sodium formaldehyde sulfoxylate (SFS)
95 parts of deionized water

The deionized water, acid, seed polymer, and portions of the SLS, CHP, and SFS, are charged into stainless steel high pressure reactor. At a temperature of 80°C, a 4 hour gradual feed of the monomers (except MMA) is begun. The remaining materials (except the MMA and a small portion of the CHP) are added either gradually or shot wise during the 4 hour period. The reaction temperature will exotherm to 95°C. After the completion of the 4 hour period, the monomer conversion is at least 85%. The MMA and remaining CHP are then fed during 3 hours while the reaction mixture is cooled to 65°C. The conversion at the end is at least 95%.

B. Preparation of the Grafted Polymer — Stage B
The materials used are:
70 parts of Bd/BA polymer
(in the form of the latex generated above)
13.5 parts of styrene (St)
3.3 parts of deionized water
0.1 parts of CHP
.05 parts of SFS

The styrene, deionized water, and SFS are added to the agitated reaction mixture at 30°C. The CHP is then added in shots over 75 min. The reaction mixture is then maintained for 1 hour.

C. Stage C
The materials used are:
83.5 parts of Bd/BA/St polymer
(in the form of the latex generated above)
14.9 parts of methyl methacrylate
1.6 parts ethyl acrylate (EA)
3.1 parts of deionized water
.015 parts SFS
.034 parts CHP

3

After adding the deionized water and SFS, a 1 hour gradual addition of monomer and CHP is begun. After maintaining for 0.5 hour, additional initiator (.017 parts t-butyl hydroperoxide and .005 parts SFS) is added. Following this, a stabilizer based on butylated hydroxy toluene antioxidant (BHT), 1.40 parts, is added.

The polymer is isolated by spray drying in one case and by coagulation in another.

## Example 2

### Comparative

In this example, the effects of agglomeration of the Stage A rubber are demonstrated to distinguish the invention from U.S.—A—4,078,018.

Preparation of the Bd/BA polymer — Stage A

The materials used are:

80 parts of butadiene
20 parts of butyl acrylate
1 part of potassium chloride
120 parts of deionized water
3 parts of potassium laurate
0.2 parts of n-dodecyl mercaptan
0.3 parts of potassium persulfate

The reaction mixture is heated to 75°C and kept at this temperature for 8 hours. The conversion is 95%.

The agglomeration is performed as follows: To the latex obtained above, there is added 0.006 parts of polyethylene glycol, having a molecular mass of 20,000, in aqueous solution at $0.5 \cdot 10^{-3}$ g/cm$^3$ (0.5 g/l). The mixture is heated to 80°C for 5 min. and then cooled.

Stage B

The materials used are:

50 parts Bd/BA polymer
(in the form of the agglomerated latex generated above)
170 parts deionized water
0.5 parts potassium persulfate in 10 parts of deionized water
25 parts methyl methacrylate (MMA)

The agitated reaction mixture is heated to and maintained at 80°C. Following addition of the potassium persulfate solution, the MMA is added continuously over 2 hours. The mixture is maintained for another 2 hours.

Stage C

The materials used are:

75 parts of Bd/BA/MMA
(in the form of the latex generated above)
25 parts styrene

To the agitated reaction mixture at 80°C, the styrene is added over 2 hours. The reaction mixture is maintained for 2 hours. Following this, a stabilizer based on BHT (1.47 parts) is added.

The polymer is isolated by addition of three times the theoretical amount (based on the emulsifier) of a mixture of hydrochloric acid and sodium chloride in 10% aqueous solution. The coagulated product is filtered, washed and dried.

It should be noted that the rubber composition of Example 1 Bd/BA/MMA = 74.1/22.1/3.8 varied slightly from that of Example 2, Bd/BA = 80/20, following the teachings of the patent. Particle size determinations showed the agglomerated rubber to be 0.1320 μm (1320 A°) (green light) — 0.1630 μm (1630 A°) (blue light).

## Example 3

### Evaluation for Impact Efficiency

Samples of PVC formulations containing the impact modifier polymer prepared in Example 1, in accordance with the invention, and Example 2, in accordance with U.S.—A—4,078,018, were molded into standard bars for Izod impact strength testing. For each case 15 phr of modifier was used. In this Izod test, 60 bars of each formulation were tested at each of two temperatures, 10°C and 0°C. A ductile break shows impact resistance whereas a non-ductile break indicates failure.

4

In this test the samples containing the modifier of the invention gave 59 ductile breaks at 10°C and 26 ductile breaks at 0°C, whereas the samples containing modifier prepared in accordance with the prior art gave no ductile breaks at either temperature, establishing an unexpected advantage of using the present sequential polymer as an impact modifier wherein Stage A is non-agglomerated.

**Claims for the Contracting States: BE CH DE FR GB IT LI NL SE**

1. Sequential polymer comprising at least three stages, Stage A being a non-crosslinked, non-agglomerated polymer comprising at least 50% by weight of units of butadiene and at least 10% by weight of units of one or more $(C_2—C_8)$-alkyl acrylates, Stage B polymer comprising at least 80% by weight of units of styrene, and Stage C polymer comprising at least 50% by weight of units of methyl methacrylate and at least 1% by weight of units of one or more $(C_1—C_4)$-alkyl acrylates, the weight ratio of Stages A:B:C, excluding optional additional stages, being 50—85:25—5:30—10, the ratio of Stages C:B being at least 1.

2. Polymer according to claim 1 wherein the $(C_1—C_4)$-alkyl acrylate in Stage C comprises ethyl acrylate.

3. Polymer according to either preceding claim wherein the alkyl acrylate in Stage A comprises butyl acrylate.

4. Polymer according to any preceding claim wherein the ratio of Stages A:B:C is 70—85:10—15:10—20.

5. Polymer according to any preceding claim containing no additional stages other than Stages A, B, and C.

6. Polymer according to any preceding claim wherein the butadiene:alkyl acrylate ratio in Stage A is 75—95:25—5.

7. Polymer according to any preceding claim wherein optional additional monomer units are included in Stages A, B, or C and comprise one or more of: styrene, lower alkyl acrylates, methacrylates, vinyl esters, acrylonitrile and crosslinking monomer units comprising one or more of: divinyl benzene, ethylene glycol dimethacrylate butylene glycol diacrylate, and allyl methacrylate; provided that said crosslinking monomer units are not included in Stage A.

8. Polymer according to any preceding claim wherein Stage A comprises copolymer of butadiene and butyl acrylate units, Stage B consists of styrene units, and Stage C comprises copolymer of methyl methacrylate and ethyl acrylate units.

9. A method of preparing polymer according to any preceding claim which comprises feeding the monomers of Stage A into a reactor in a manner so as to yield a Stage A polymer of uniform particle size in the range 0.15 μm to 0.20 μm (1500 to 2000 A°), and polymerizing subsequent stages B and C in the presence of previously formed particles of said stage A polymer under conditions such that the locus of polymerization is at the surface of the previously formed particles.

10. Polymer composition comprising thermoplastic polymer and 1 to 25% by weight based on thermoplastic polymer of polymer according to any of claims 1 to 8.

11. Polymer composition according to claim 10 wherein said thermoplastic polymer comprises PVC.

**Claims for the Contracting State: AT**

1. A method of making sequential polymer comprising at least three stages, Stage A being a non-crosslinked, non-agglomerated polymer comprising at leat 50% by weight of units of butadiene and at least 10% by weight of units of one or more $(C_2—C_8)$-alkyl acrylates, Stage B polymer comprising at least 80% by weight of units of styrene, and Stage C polymer comprising at least 50% by weight of units of methyl methacrylate and at least 1% by weight of units of one or more $(C_1—C_4)$-alkyl acrylates, the weight ratio of Stages A:B:C, excluding optional additional stages, being 50—85:25—5:30—10, the ratio of Stages C:B being at least 1, which method comprises feeding the monomers of Stage A into a reactor in a manner so as to yield a Stage A polymer of uniform particle size in the range 0.15 μm to 0.20 μm (1500 to 2000 A°), and polymerizing subsequent stages B and C in the presence of previously formed particles of said stage A polymer under conditions such that the locus of polymerization is at the surface of the previously formed particles.

2. Method according to claim 1 wherein the $(C_1—C_4)$-alkyl acrylate in Stage C comprises ethyl acrylate.

3. Method according to either preceding claim wherein the alkyl acrylate in Stage A comprises butyl acrylate.

4. Method according to any preceding claim wherein the ratio of Stages A:B:C: is 70—85:10—15:10—20.

5. Method according to any preceding claim containing no additional stages other than Stages A, B, and C.

6. Method according to any preceding claim wherein the butadiene:alkyl acrylate ratio in Stage A is 75—95:25—5.

7. Method according to any preceding claim wherein optional additional monomer units are included in Stages A, B or C and comprise one or more of: styrene, lower alkyl acrylates, methacrylates, vinyl esters, acrylonitrile and crosslinking monomer units comprising one or more of: divinyl benzene, ethylene glycol dimethacrylate; butylene glycol diacrylate, and allyl methacrylate; provided that said crosslinking monomer units are not included in Stage A.

8. Method according to any preceding claim wherein Stage A comprises copolymer of butadiene and butyl acrylate units, Stage B consists of styrene units, and Stage C comprises copolymer of methyl methacrylate and ethyl acrylate units.

9. Use of a sequential polymer produced by a method according to any preceding claim as impact modifier in thermoplastic polymer.

10. Use according to claim 9 wherein said thermoplastic polymer is PVC, the sequential polymer comprising from 1 to 25% by weight based on the weight of PVC.

**Patentansprüche für die Vertragsstaaten: BE CH DE FR GB IT LI NL SE**

1. Sequenzpolymeres aus wenigstens 3 Stufen, wobei die Stufe A ein nichtvernetztes und nichtagglomeriertes Polymeres aus wenigstens 50 Gew.-% Butadieneinheiten und wenigstens 10 Gew.-% Einheiten eines oder mehrerer $C_2$—$C_8$-Alkylacrylate ist, das Polymere der Stufe B aus wenigstens 80 Gew.-% Styroleinheiten besteht und das Polymere der Stufe C aus wenigstens 50 Gew.-% Methylmethacrylateinheiten und wenigstens 1 Gew.-% Einheiten eines oder mehrerer $C_1$—$C_4$-Alkylacrylate besteht, wobei das Gewichtsverhältnis der Stufen A:B:C ausschließlich gegebenenfalls vorliegender weiterer Stufen 50—85:25—5:30—10 und das Verhältnis der Stufen C:B wenigstens 1 beträgt.

2. Polymeres nach Anspruch 1, dadurch gekennzeichnet, daß das $C_1$—$C_4$-Alkylacrylat in der Stufe C aus Ethylacrylat besteht.

3. Polymeres nach einem der vorhergehenden Ansprüche, dadurch gekennzeichnet, daß das Alkylacrylat in der Stufe A aus Butylacrylat besteht.

4. Polymeres nach einem der vorhergehenden Ansprüche, wobei das Verhältnis der Stufen A:B:C 70—85:10—15:10—20 betgrägt.

5. Polymeres nach einem der vorhergehenden Ansprüche, das keine weiteren Stufen als die Stufen A, B und C enthält.

6. Polymeres nach einem der vorhergehenden Ansprüche, wobei das Butadien:Alkylacrylat-Verhältnis in der Stufe A 75—95:25—5 beträgt.

7. Polymeres nach einem der vorhergehenden Ansprüche, wobei gegebenenfalls zusätzliche Monomereinheiten in den Stufen A, B oder C vorliegen, und aus einem oder mehreren der Bestandteile Styrol niederen Alkylacrylaten, Methacrylaten, Vinylestern, Acrylnitril und vernetzenden Monomereinheiten aus einem oder mehreren der Bestandteile Divinylbenzol, Ethylenglykoldimethacrylat, Butylenglykoldiacrylat und Allylmethacrylat bestehen, unter der Voraussetzung, daß die vernetzenden Monomereinheiten nicht in der Stufe A vorliegen.

8. Polymeres nach einem der vorhergehenden Ansprüche, wobei die Stufe A aus einem Copolymeren aus Butadien und Butylacrylateinheiten, die Stufe B aus Styroleinheiten und die Stufe C aus einem Copolymeren aus Methylmethacrylat- und Ethylacrylateinheiten besteht.

9. Verfahren zur Herstellung eines Polymeren gemäß einem der vorhergehenden Ansprüche, dadurch gekennzeichnet, daß die Monomeren der Stufe A in einen Reaktor in einer solchen Weise eingeführt werden, daß ein Polymeres der Stufe A in einer gleichmäßigen Teichengröße in einem Bereich von 0,15 μm bis 0,20 μm (1500 bis 2000 Å) erhalten wird und anschließend die Stufen B und C in Gegenwart der zuvor gebildeten Teilchen des Polymeren der Stufe A unter solchen Bedingungen polymerisiert werden, daß die Polymerisationsstelle sich auf der Oberfläche der zuvor gebildeten Teilchen befindet.

10. Polymermasse aus einem thermoplastischen Polymeren und 1 bis 25 Gew.-%, bezogen auf das thermoplastische Polymere, eines Polymeren gemäß einem der Ansprüche 1 bis 8.

11. Polymermasse nach Anspruch 10, wobei das thermoplastische Polymere aus PVC besteht.

**Patentansprüche für den Vertragsstaat: AT**

1. Verfahren zur Herstellung eines Sequenz-Polymeren aus wenigstens drei Stufen, wobei die Stufe A ein nichtvernetztes und nichtagglomeriertes Polymeres aus wenigstens 50 Gew.-% Butadieneinheiten und wenigstens 10 Gew.-% Einheiten eines oder mehrerer $C_2$—$C_8$-Alkylacrylate ist, die Stufe B ein Polymeres aus wenigstens 80 Gew.-% Styroleinheiten und die Stufe C ein Polymeres aus wenigstens 50 Gew.-% Methylmethacrylateinheiten und wenigstens 1 Gew.-% Einheiten eines oder mehrerer $C_1$—$C_4$-Alkylacrylate ist, wobei das Gewichtsverhältnis der Stufen A:B:C ausschließlich gegebenenfalls vorliegender weiterer Stufen 50—85:25—5:30—10 beträgt und das Verhältnis der Stufen C:B wenigstens 1 ist, dadurch gekennzeichnet, daß die Monomeren der Stufe A in einen Reaktor in einer solchen Weise eingeführt werden, daß ein Polymeres der Stufe A mit gleichmäßiger Teilchengröße im Bereich von 0,15 μm bis 0,20 μm (1500 bis 2000 Å) erhalten wird, und die anschließenden Stufen B und C in Gegenwart der zuvor geformten Teilchen des Polymeren der Stufe A unter solchen Bedingungen polymerisiert werden, daß die Polymerisationsstelle sich auf der Oberfläche der zuvor geformten Teilchen befindet.

2. Verfahren nach Anspruch 1, dadurch gekennzeichnet, daß das $C_1$—$C_4$-Alkylacrylat in der Stufe C aus Ethylacrylat besteht.

6

3. Verfahren nach einem der vorhergehenden Ansprüche, dadurch gekennzeichnet, daß das Alkylacrylat in der Stufe A aus Butylacrylat besteht.

4. Verfahren nach einem der vorhergehenden Ansprüche, dadurch gekennzeichnet, daß das Verhältnis der Stufen A:B:C 70—85:10—15:10—20 beträgt.

5. Verfahren nach einem der vorhergehenden Ansprüche, wobei keine weiteren Stufen außer den Stufen A, B und C vorgesehen sind.

6. Verfahren nach einem der vorhergehenden Ansprüche, dadurch gekennzeichnet, daß das Butadien:Alkylacrylat-Verhältnis in der Stufe A 75—95:25—5 beträgt.

7. Verfahren nach einem der vorhergehenden Ansprüche, dadurch gekennzeichnet, daß gegebenenfalls weitere Monomereinheiten in den Stufen A, B oder C vorgesehen sind und aus einem oder mehreren der folgenden Bestandteile bestehen: Styrol, niederen Alkylacrylaten, Methacrylaten, Vinylestern, Acrylnitril und vernetzenden Monomereinheiten aus einem oder mehreren der Bestandteile: Divinylbenzol, Ethylenglykoldimethacrylate, Butylenglykoldiacrylat und Allylmethacrylat, unter der Voraussetzung, daß die vernetzenden Monomereinheiten nicht in der Stufe A vorliegen.

8. Verfahren nach einem der vorhergehenden Ansprüche, dadurch gekennzeichnet, daß die Stufe A aus einem Copolymeren aus Butadien- und Butylacrylateinheiten, die Stufe B aus Styroleinheiten und die Stufe C aus einem Copolymeren aus Methylmethacrylat- und Ethylacrylateinheiten besteht.

9. Verwendung eines Sequenz-Polymeren, erzeugt nach einem Verfahren gemäß einem der vorhergehenden Ansprüche, als Schlagfestigkeitsmodifizierungsmittel in einem thermoplastischen Polymeren.

10. Verwendung nach Anspruch 9, wobei das thermoplastische Polymere aus PVC besteht und das Sequenz-Polymere 1 bis 25 Gew.-%,-bezogen auf das Gewicht des PVC, ausmacht.

**Revendications pour les Etats contractants: BE CH DE FR GB IT LI NL SE**

1. Polymère séquencé comprenant au moins trois couches, la couche A étant faite d'un polymère non réticulé et non aggloméré comprenant au moins 50% en poids de motifs de butadiène et au moins 10% en poids de motifs d'un ou plusieurs acrylates d'alcoyle ($C_2$—$C_8$), le polymère de la couche B comprenant au moins 80% en poids de motifs de styrène et le polymère de la couche C comprenant au moins 50% en poids de motifs de méthacrylate de méthyle et au moins 1% en poids de motifs d'un ou plusieurs acrylates d'alcoyle ($C_1$—$C_4$), le rapport pondéral des couches A/B/C, à l'exclusion des couches additionnelles facultatives, étant de 50—85/25—5/30—10, le rapport des couches C/B étant d'au moins 1.

2. Polymère selon la revendication 1 dans lequel l'acrylate d'alcoyle ($C_1$—$C_4$) de la couche C comprend l'acrylate d'éthyle.

3. Polymère selon l'une ou l'autre des revendications précédentes dans lequel l'acrylate d'alcoyle de la couche A comprend l'acrylate de butyle.

4. Polymère selon l'une quelconque des revendications précédentes dans lequel le rapport des couches A/B/C est de 70—85/10—15/10—20.

5. Polymère selon l'une quelconque des revendications précédentes ne contenant pas de couche additionnelle autre que les couches A, B et C.

6. Polymère selon l'une quelconque des revendications précédentes dans lequel le rapport butadiène/acrylate d'alcoyle dans la couche A est de 75—95/25—5.

7. Polymère selon l'une quelconque des revendications précédentes dans lequel des motifs monomères additionnels facultatifs sont inclus dans les couches A, B ou C et comprennent un ou plusieurs de: styrène, acrylates et méthacrylates d'alcoyle inférieur, esters vinyliques, acrylonitrile et motifs monomères réticulants comprenant un ou plusieurs de: divinylbenzène, diméthacrylate d'éthylèneglycol, diacrylate de butylèneglycol et méthacrylate d'allyle; sous réserve que lesdits motifs monomères réticulants ne soient pas compris dans la couche A.

8. Polymère selon l'une quelconque des revendications précédentes dans lequel la couche A comprend un copolymère de motifs de butadiène et d'acrylate de butyle, la couche B est constituée de motifs de styrène et la couche C comprend un copolymère de motifs de méthacrylate de méthyle et d'acrylate d'éthyle.

9. Un procédé pour préparer un polymère selon l'une quelconque des revendications précédentes, qui comprend l'introduction des monomères de la couche A dans un réacteur de façon à former un polymère de couche A de taille uniforme des particules dans la gamme de 0,15 µm à 0,20 µm (1 500 à 2 000 Å) et la polymérisation ultérieure des couches B et C en présence des particules précédemment formées dudit polymère de la couche A dans des conditions telles que le site de polymérisation soit à la surface des particules précédemment formées.

10. Composition polymère comprenant un polymère thermoplastique et 1 à 25% en poids par rapport au polymère thermoplastique d'un polymère selon l'une quelconque des revendications 1 à 8.

11. Composition polymère selon la revendication 10 dans laquelle ledit polymère thermoplastique comprend du PCV.

# 0 082 717

**Revendications pour l'Etat contractant: AT**

1. Un procédé de préparation d'un polymère séquencé comprenant au moins trois couches, la couche A étant faite d'un polymère non réticulé et non aggloméré comprenant au moins 50% en poids de motifs de butadiène et au moins 10% en poids de motifs d'un ou plusieurs acrylates d'alcoyle ($C_2$—$C_8$), le polymère de la couche B comprenant au moins 80% en poids de motifs de styrène et le polymère de la couche C comprenant au moins 50% en poids de motifs de méthacrylate de méthyle et au moins 1% en poids de motifs d'un ou plusieurs acrylates d'alcoyle ($C_1$—$C_4$), le rapport pondéral des couches A/B/C, à l'exclusion des couches additionnelles facultatives, étant de 50—85/25—5/30—10, le rapport des couches C/B étant d'au moins 1, lequel procédé comprend l'introduction des monomères de la couche A dans un réacteur de façon à former un polymère de couche A de taille uniforme des particules dans la gamme de 0,15 μm à 0,20 μm (1 500 à 2 000 Å) et la polymérisation des couches suivantes B et C en présence des particules précédemment formées dudit polymère de couche A dans des conditions telles que le site de polymérisation soit à la surface des particules précédemment formées.

2. Procédé selon la revendication 1 dans lequel l'acrylate d'alcoyle ($C_1$—$C_4$) de la couche C comprend l'acrylate d'éthyle.

3. Procédé selon l'une ou l'autre des revendications précédentes dans lequel l'acrylate d'alcoyle de la couche A comprend l'acrylate de butyle.

4. Procédé selon l'une quelconque des revendications précédentes dans lequel le rapport des couches A/B/C est de 70—85/10—15/10—20.

5. Procédé selon l'une quelconque des revendications précédentes ne contenant pas de couche additionnelle autre que les couches A, B et C.

6. Procédé selon l'une quelconque des revendications précédentes dans lequel le rapport butadiène/acrylate d'alcoyle dans la couche A est de 75—95/25—5.

7. Procédé selon l'une quelconque des revendications précédentes dans lequel des motifs monomères additionnels facultatifs sont inclus dans les couches A, B ou C et comprennent un ou plusieurs de: styrène, acrylates et méthacrylates d'alcoyhle inférieur, esters vinyliques, acrylonitrile et motifs monomères réticulants comprenant un ou plusieurs de: divinylbenzène, diméthacrylate d'éthylèneglycol, diacrylate de butylèneglycol et méthacrylate d'allyle; sous réserve que lesdits motifs monomères réticulants ne soient pas compris dans la couche A.

8. Procédé selon l'une quelconque des revendications précédentes dans lequel la couche A comprend un copolymère de motifs de butadiène et d'acrylate de butyle, la couche B est constituée de motifs de styrène et la couche C comprend un copolymère de motifs de méthacrylate de méthyle et d'acrylate d'éthyle.

9. Emploi d'un polymère séquencé, produit par un procédé selon l'une quelconque des revendications précédentes, comme modificateur de la résistance au choc dans un polymère thermoplastique.

10. Emploi selon la revendication 9 dans lequel ledit polymère thermoplastique est le PCV, le polymère séquencé constituant de 1 à 25% en poids par rapport au poids du PCV.

8